Europäisches Patentamt

European Patent Office

Office européen des brevets

(11) Publication number: **0 491 458 A1**

# EUROPEAN PATENT APPLICATION

(21) Application number: **91307298.9**

(22) Date of filing: **08.08.91**

(51) Int. Cl.5: **G11B 7/14**

(30) Priority: **14.12.90 US 627404**

(43) Date of publication of application:
**24.06.92 Bulletin 92/26**

(84) Designated Contracting States:
**DE FR GB IT NL**

(71) Applicant: **GENERAL ELECTRIC COMPANY**
**1 River Road**
**Schenectady, NY 12345(US)**

(72) Inventor: **Reno, Charles William**
**1937 West Point Court**
**Cherry Hill, New Jersey 08003(US)**

(74) Representative: **Pratt, Richard Wilson et al**
**London Patent Operation G.E. Technical**
**Services Co. Inc. Essex House 12/13 Essex**
**Street**
**London WC2R 3AA(GB)**

(54) **Multiple channel optical disk system.**

(57) An optical disk data storage system utilizes a plurality of substantially parallel interrogating light beams to simultaneously read data from an equal number of data-storing formations at a surface of a storage disk. Preferably, an even number of data-track-reading light beams are utilized, with an additional central beam being used for reading a pre-formatted tracking formation, allowing the reading beams to remain centered upon the associated data formations. A laser-like source provides a single output beam which is split, as by a grating and the like, to provide a plurality of simultaneous, substantially continuous beams. In a system in which data can be written to the optical disk, a plurality of writing light beams, each having data different from the data contained in any other writing light beam, is assigned and utilized to write a different data stream to an associated one of the plurality of readable formations. A central pilot track is illuminated to generate tracking error and focus error signals which are fed back through the system to keep each of the pair of reading beams tracking along, and focused upon, the associated one of the pair of readable data formations.

Fig. 1

## FIELD OF THE INVENTION

The present invention relates to optical disk data memory systems and, more particularly, to a novel optical disk system having a plurality of simultaneously-usable channels. Data can be simultaneously read from, or written into, all of the plurality (2n, where n = 1, 2, 3, ...) of data tracks of the optical disk, with each track, or channel, utilizing an associated optical beam; a central beam of a (2n + 1)-beam configuration can be utilized to track an optional pre-formatted disk feature.

## BACKGROUND OF THE INVENTION

It is now well known to store data upon a rotatable disk from which the data can be read in optical fashion. The disk serves as a data memory, which may be of the read-only (ROM) type, such as a CD recording in which the presence or absence of a pit ablatively formed into the surface of the medium determines whether an interrogative light beam is, or is not, reflected therefrom to determine the state of a binary output signal. However, optical disks may also be of the write-once, read-many times (WORM) archival form, or the erasable form, which use magneto-optic (M-O) properties to allow data to be written and rewritten, as many times as desired and in any sequence, with at least one subsequent reading cycle. Typically, one channel of information was read from the optical disk at any instant, although technology does exist for using multiple channels at any one time. Hitherto, multiple-channel systems have required a benign operational environment; many such systems use a self-formatting write technique which requires turntables of very high accuracy, for writing good circular tracks without interference. It is highly desirable to provide an optical disk system in which a plurality of data channels are simultaneously read from a preformatted optical disk in which high-quality tracking formations, provided in a benign environment, for use in a more disturbed environment. It is also highly desirable to provide such an optical disk system in which each of different streams of data can be simultaneously written to an associated one of a plurality of data channels to increase the data input rate.

## BRIEF DESCRIPTION OF THE INVENTION

In accordance with the invention, an optical disk data storage system utilizes a plurality of substantially parallel interrogating light beams to simultaneously read data from a plurality of data-storing formations at a surface of a storage disk. Preferably, an even number of data-track-reading light beams are utilized. An additional central beam may be provided for reading a preformatted tracking formation, allowing the reading beams to remain centered upon the associated data formations. A source, such as a laser and the like, provides a single read beam which is split, as by a grating and the like, to provide a plurality of simultaneous, substantially continuous beams, of number, spacing and the like characteristics determined by the characteristics of the beam-separation means. Advantageously, in a system in which data can be written to the optical disk, each of a plurality of writing light beams is modulated with data different from the data modulated on any other writing light beam, and is assigned and utilized to write a different data stream to an associated one of the plurality of readable formations.

In a presently preferred embodiment, a pair of simultaneous reading beams are utilized, with the reading detector providing a differential pair of signals for each beam and with another set of detectors generating tracking error and focus error signals which are fed back through the system to keep each of the pair of reading beams tracking along, and focused upon, the associated one of the pair of readable data formations.

Accordingly, it is one object of the present invention to provide a novel optical disk data storage system having a plurality of simultaneous data-reading and/or data-writing light beams.

This and other objects of the present invention will become apparent to those skilled in the art, upon reading the following detailed description, when considered in conjunction with the drawings.

## BRIEF DESCRIPTION OF THE DRAWINGS

Figure 1 is a schematic block diagram of an optical disk information storage system in accordance with the principles of the present invention, and of a portion of an optical disk with which it is used;

Figure 2 is a schematic representation of a focus detector for use in one presently preferred embodiment of my invention; and

Figure 3 is a representation of a plurality of beam spots of different diffraction orders, and useful in appreciating other features of the present invention.

## DETAILED DESCRIPTION OF THE INVENTION

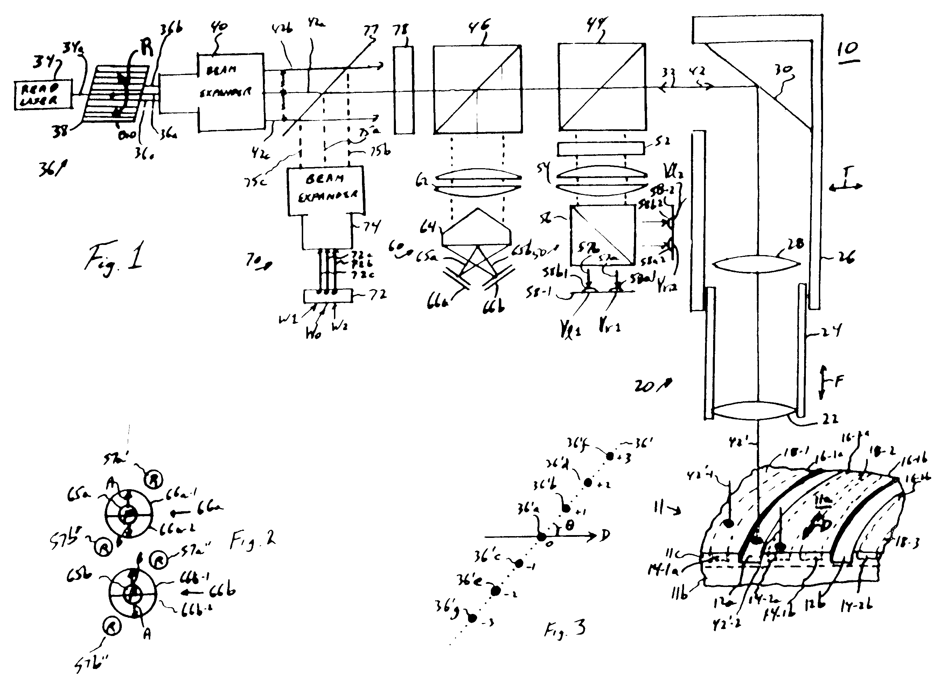

Referring initially to Figure 1, an optical disk system 10 is utilized for at least reading information from, if not also writing information to, a plurality of separate information-containing formations in an optical disk 11. Many different forms of optical disk 11 are known, and all such forms are usable with system 10, as long as optical disk 11 provides an information readout mechanism which is responsive to an impingent interrogation beam of light. I contemplate optical disks 11 of the read-only, write-once/read-many, erasable and the like forms; data readout by reflection from formations, magneto-optical processes and the like are all contemplated. Thus, disk 11 has a surface 11a into which at least one pre-formatted guide track 12 has been formed into the optical disk substrate 11b. The guide track 12 may be a single continuous spiral track, viewable in disk cross-section as a plurality of tracks 12a, 12b, ... each at a different radial distance from a disk central axis (not shown). Each optical data-storage disk 11 for use with my novel system 10, will have a plurality of data storage formations 14 associated with each tracking formation 12; advantageously, the storage formations 14 will be equally distributed to either side of tracking formation 12. Illustratively, the storage formations are imaginary regions in a layer 11c, atop the disk substrate 11b and below the disk surface 11a, in which layer magnetooptic domains can be formed (written), recognized (read) and rewritten (erased) although other forms can be equally as well utilized. Typically, an even number 2n, with n = 1, 2, 3,..., of data-storage formations 14 are utilized, although use of an odd number of such formations is possible. In the simplest case, as illustrated, n = 1 and a pair of data-storage formations 14 are utilized with each tracking formation; here, a first data storage formation 14-1a (in which data regions can be formed) is situated to a first side of the tracking group 12a, with another data-storage formation 14-2a being situated to the opposite side thereof. A second tracking groove 12b is placed in the middle of first and second ones of a second pair of data-storage formations 14-1b/14-2b. Advantageously, the first data storage formation 14-1a is separated from the optical disk edge (not shown) by a first surface region 18-1. Additional surface regions 18-2, 18-3, ... separate the (2n + 1) set of tracking/information-storage formations of each track. The information, possibly in a binary digital form, may be stored as regions of different magnetization, reflectance, depth and the like characteristics. Typically, the tracking grooves 12 are cut into surface 11a to a feed depth, which advantageously would be about one-sixth of the wavelength of the interrogating light beams (which is one reason why monochromatic light, from a laser and the like source, is typically utilized). The groove widths may be chosen to maximize packing density and the slope of the tracking error/spot displacement curves, in manner well known to the optical disk arts. Typical track widths of 0.4-0.8 micrometers are contemplated with a track-track pitch, between tracking grooves 12a and 12b, on the order of 3 micrometers, for a preformatted pilot track 12 of width about 0.4 micrometers.

That portion of system 10 closest to disk 11 is a tracking and focus assembly 20 which includes a first lens means 22, carried by a mechanically movable member 24, movable for focusing purposes toward and away from the disk surface, in the directions of arrows F. Member 24 is movable, by means well known but not shown, with respect to another member 26 which is itself movable in a radial direction with respect to the disk, and transverse to the focusing direction of arrows F, as shown by transverse arrows T. Member 26 may carry additional lens means 28 and means 30 for redirecting the light beams impingent upon, or reflected from, disk 11. As is well known in the art, optical assemblies in this form can be utilized to radially move from track to track of the disk, while still focusing the various light beams and changing the direction thereof. Thus, a group of substantially parallel light beams, represented by central beam 32, are provided by a single read source 34, such as a laser diode and the like, with the single read source output beam 34a being separated into a plurality of substantially parallel beams 36a-c by a beam-forming means 36. Advantageously, and in accordance with one principle of the present invention, means 36 includes a diffracting grating 38 having phase characteristics such that a single entering beam 34a not only provides a central output beam 36a, but is also diffracted to provide at least one beam 36b-36c on either side of the central beam 36a. The spacing of output beams 36a-c is determined by rotation of diffraction grating 38 about the line-of-travel of beam 34a, in the direction of arrows R, to rotate the grating angle $\theta$, with respect to the direction of the entering beam 34a, the line of beams also rotated at the disk relative to the disk velocity, so that track P spacing is then $S \sin \theta$, where S is the beam spacing distance and $\theta$ is an angle between the disk velocity vector and the array image length. The substantially-parallel, collimated beams 36a-36c may be passed through a beam expansion means 40 to provide a set of output beams 42a-42c equal in number to the input beams 36a-36c, but having greater spacings S therebetween. The bundle of beams 42 impinge upon the disk 11 surface, are reflected therefrom and, as previously mentioned, appear as a bundle of reflected beams 32, emitted from apparatus 20. Beams 32 enter a first beam-splitting means 44 and are reflected to pass into a reading means 50. Means 50 may include a quarter-wave plate 52, lens means 54, a Wollaston prism 56 and the like, for focusing two pair of spaced-apart read beams 57a1/57b1 and 57a2/57b2 respectively upon first and second pairs 58a1/58b1 and 58a2/58b2 of detectors elements 58-1 and 58-2 of a solid-state optical detection means 58. Each of the detector elements provides a separate electrical output signal, e.g. detector element 58a1 providing an output signal Vr1 and separate detector element 58a2 providing a separate output signal Vr2, both for the right formation 14-1a, while detector elements 58b1/58b2 provide separate output signals Vl1 and Vl2 for the left formation 14-2a. The track recovered data signal is the difference between the formation output signals, e.g. left track data is (Vl1-Vl2), and right track data is (Vr1-Vr2). Further detail of one read process may be found, e.g. in Challener and Rinehart, "Jones matrix analysis of magneto-optical media and read-back systems", APPLIED OPTICS, Vol.26, No. 12, pp. 3974-3980(15 Sept. 1987).

At least the central reflected beam portion 32a passes through beam-splitter means 44 and arrives at a second beam- splitter means 46, which directs beam 32a into a tracking detector means 60. Means 60 may include lens means 62 and a so-called roof prism 64, for forming and directing beam portion 65a/65b into an associated one of track detector elements 66a or 66b. As shown in Figure 2, if the central beam impinges directly upon formation 12a, indicating that the central beam is centrally located in, and tracking, the pilot formations 12, the beams 65a and 65b pass substantially equally between detector portions 66a-1/66a-2 and 66b-1/66b-2, respectively, and so contributes equally to the output signals therefrom. Note that the read (or write) beam reflections R are so spaced as to not pass over any detection portion of means 66. However, if the central reflected beam moves to one side (e.g. leftwardly, as shown by arrows A) or the other (e.g. rightwardly, as shown by arrows B), one of the detector segment signals is lessened while the other is increased, indicating that the tracking beam is not centrally positioned; by use of feedback means well known to the art, these error signals can be utilized to move assembly 20 in the direction of arrows F and/or T and reacquire central groove 12 tracking and refocus the read/write beams on formations 14.

In accordance with another aspect of my invention, a plurality of different data streams can be simultaneously written to optical disk 11 by use of writing means 70, which includes a plurality of individually-modulatable light source means 72, each producing a separate substantially collimated and coherent light beam 72a-72c. Unlike the reception beam formation process using a single source 34, a plurality of separate sources 72 are necessary, as the data modulated onto each of the side-formations-associated beams 72b, 72c, ... will be different. Thus, a first data write signal $W_1$ is provided to the write laser array 72 to cause a first modulated beam 72b to be formed, while a different data stream $W_2$ is provided to cause a different modulated beam 72c to be present. It will be understood that a central laser, providing a central beam 72a, will generally be provided to cause a reflection from the pre-formatted pilot track groove 12a so that tracking means 60 operates to maintain the beams at the proper grooves as in the case of the spherical light source of 32a; the central beam is normally unmodulated, although modulation can be used if provision is made for storage of data in the pilot track formation. It will be understood that, if the primary tracking purpose of groove 12 cannot be given up, use of this track for information storage is secondary and any data storage function may have to have a lower-than-normal rate (bandwidth). Thus, if data is written to the pilot track 12, then a modulation rate must be used which is lower than the modulation rates used to write data to the data tracks 14; typically, the data track spectrum runs from about 1 MHz. to about 5 MHz.; the format (pilot) data track spectrum will generally be (if used at all) below 1 MHz. Whichever modulation scheme is selected, the plurality of write beams 72a-c pass through a write-beam expander means 74, to emerge as more-widely-spaced write beams 75a-75c, which are reflected onto the path of main beam 42 and then operated upon by any needed optical means 78.

In accordance with another principle of the present invention, additional pairs of data tracks 14 can be provided upon the optical disk 11, and data can be written to and/or read from these additional data tracks by means of additional beams provided either by stacking additional source arrays or by modification of the source-and-grating means and the like. That is, a single read laser means 34, emitting a single read beam 34a, can be utilized to read a disk having a configuration with multiple pairs of data tracks, by passing the single output beam 34a through a different phased grating 36' (Figure 3), possibly having a different angle $\theta$ with respect to the entry beam direction. As is now well known in the art, as may be obtained from information such as that found in an article "High Efficiency Multiple Beam Gratings" by Wai-Hon Lee in APPLIED OPTICS, Vol. 18, No. 13 (1 July 1979), a single beam can be dispersed into different orders of multiple output beams. Thus, the central, or zero-th order, beam can have upon each side thereof a first order beam (such as the ± 1 beams 36b and 36c in the primary example of Figure 1), a second order beam (such as the ± 2 beams 36'c/36'd), a third order beam (such as the ± 3 beams 36'f/36'g) and the like. Therefore, this multiple data track technique can be extended from two data tracks to 4, 6, 8, ... , 2n data tracks by creating spots using any available means, such as a grating and the like, which will suppress the even diffraction orders and substantially evenly diffract light to the odd order spots.

Several presently preferred embodiments of our novel multiple channel optical disk system have been discussed herein, many modifications and variations will now become apparent to those skilled in the art. It is our intent, therefore, not to be limited by way of the specific details and instrumentalities presented by way of explanation of the selected, presently preferred examples herein.

## Claims

1. An optical disk data storage system, comprising:

   means for providing a plurality of interrogating light beams;

   means for directing each different one of the plurality of interrogating beams upon an associated different one of an equal number of formations at a surface of the optical disk; and

   means, receiving light reflected from each of said formations, for simultaneously reading a different stream of data from at least two formations.

2. The system of claim 1, wherein an even number 2n, where n = 1,2,3,..., of data-storing formations are simultaneously read.

3. The system of claim 2, wherein n = 1 and each of a pair of data-storing formations is formed to a different side of a central tracking formation.

4. The system of claim 3, further including means for interrogating the tracking formation to obtain information for maintaining at least one of the focus and tracking of the interrogating beams upon the associated formations.

5. The system of claim 4, wherein the maintaining means includes detector means, receiving the light beam reflected from the central formation, for both focusing and tracking the interrogating beams upon at least the data-storing formations.

6. The system of claim 3, wherein said beam-providing means includes: means for providing a single beam of light; and means for splitting the single beam into the required number of interrogating beams.

7. The system of claim 6, wherein the beam-splitting means is a diffraction grating.

8. The system of claim 7, wherein the single-beam-providing means is a laser.

9. The system of claim 1, further including means for maintaining at least one of the focus and tracking of the interrogating beams upon the associated formations.

10. The system of claim 1, wherein said interrogating beams are provided substantially parallel to one another.

11. The system of claim 1, wherein said beam-providing means is adapted to provide an odd number of beams, including a beam for interrogating a tracking formation.

12. The system of claim 11, wherein the tracking formation is central to the even-plurality of data-storing formations.

13. The system of claim 12, wherein n is greater than 1, and said beam-providing means includes: means for providing a single beam of light; and means for splitting the single beam into the at-least-four required number of interrogating beams.

14. The system of claim 1, further comprising means for writing each of a plurality of different data streams to an associated one of said data-storing formations.

15. The system of claim 14, wherein said writing means includes an array of modulatable light sources, each directed upon the associated different data-storing formation.

16. The system of claim 15, wherein each source is directed upon its associated formation by the reading beam directing means.

17. The system of claim 15, wherein the optical disk includes a tracking formation associated with said plurality of data-storing formations, and the system further includes means for writing another stream of data onto the tracking formation.

18. The system of claim 17, wherein said reading means also reads the data from the tracking formation.

# EUROPEAN SEARCH REPORT

## DOCUMENTS CONSIDERED TO BE RELEVANT

EP 91307298.9

| Category | Citation of document with indication, where appropriate, of relevant passages | Relevant to claim | CLASSIFICATION OF THE APPLICATION (Int. Cl.5) |
|---|---|---|---|
| E | EP - A - 0 441 435 <br> (N. V. PHILIPS' GLOEILAMPEN-FABRIEKEN) <br>     * Fig. 1; abstract * | 1,2, 4-6, 8-10, 14,16 | G 11 B 7/14 |
| X | EP - A - 0 092 420 <br> (XEROX CORPORATION) <br>     * Fig. 1-10; abstract * | 1,2, 4-6, 8-10, 14,16 | |
| X | EP - A - 0 372 365 <br> (SHARP K. K.) <br>     * Fig. 1-5; abstract * | 1,2, 4-6, 8-10, 14,16 | |

| | |
|---|---|
| | TECHNICAL FIELDS SEARCHED (Int. Cl.5) |
| | G 11 B 7/00 |

The present search report has been drawn up for all claims

| Place of search | Date of completion of the search | Examiner |
|---|---|---|
| VIENNA | 19-03-1992 | BERGER |